# EUROPEAN PATENT SPECIFICATION

(11) **EP 1 884 151 B1**
(45) Date of publication and mention of the grant of the patent: **15.09.2010**
(21) Application number: 07112175.0
(22) Date of filing: 10.07.2007
(51) Int. Cl.: A01B 71/06, A01D 41/16

(54) **Method and device for automatically coupling a combine feeder interface and a combine header.**
Verfahren und Vorrichtung zum automatischen Koppeln des Förderers und des Schneidwerks eines Mähdreschers
Procédé et dispositif pour coupler automatiquement une interface d'alimentation combinée et un en-tête combiné

(30) Priority: 10.07.2006 US 483926
(43) Date of publication of application: 06.02.2008
(73) Proprietor: CNH Belgium N.V., 8210 Zedelgem (BE)
(72) Inventor: Guske, William C., Geneseo, IL 61254 (US)
(74) Representative: CNH IP Department

(56) References cited:
- BE-A- 738 854
- DE-A1- 2 124 341
- DE-A1- 2 307 698
- DE-A1- 4 412 116
- US-A- 3 412 534

## Description

The present invention relates to the coupling of combine feeder interfaces and combine headers; and it particularly relates to automatically coupling the same.

The combine harvester, or simply combine, is a machine that harvests, threshes, and cleans grain plants. Today's combines are self-propelled and use diesel engines for power. Rotary designed combines were significant advancements in the art in the late 1970s. Today's combines are equipped with removal heads, or headers, designed for particular crops. There is the standard head or grain platform, which is used for many crops including grain, legumes and many seed crops. There are also wheat heads, pickup heads, specialized corn heads, row crop heads, etc. The headers are all interchangeable and made to fit the particular combine feeder interfaces whereupon the crop can advance through the headers and into the feeder of the combine.

Conventionally, combine feeder housings are equipped with quick-connect coupling mechanisms at the interface of the feeder and the header so as to enable an operator to easily change from one header to another and connect the various feeder shafts to the header drive shafts. Attached to the back of each header are two (left and right of centre) quick-connect latches. Attachment of these header latches is accomplished by lowering the combine feeder and driving the combine forward until the feeder interface equipped with two quick-connect yokes contacts the header latches. The raising and lowering of the combine feeder is accomplished by hydraulic cylinders which extend to raise the feeder, allowing the quick-connect yokes to slide up and against the quick-connect latches on the header and thereafter the header can be raised. As the feeder is raised, its weight holds it in place against the quick-connect yokes. The feeder is thereafter locked against the header with manual locking mechanisms set by the operator. When these mechanisms are set to their locked position, the header cannot unhook or fall from the combine feeder. The attachment of the header and feeder is completed by connecting various drive belts and chains that are necessary for the header to operate and by coupling the header drive shafts with the feeder jack shafts manually.

US-A-3,412,534 illustrates a combine feeder and corn header arrangement wherein the left and right halves of the header are driven by respective left and right drive shafts. Each shaft is provided with a telescoping shaft portion that has a coupling member at its outer end. After mounting the header onto the front face of the feeder, the telescoping shafts can be extended towards the feeder to matingly engage coupling members on a drive shaft below the feeder housing. This drive shaft is provided with a pulley of a belt drive that can be coupled to the combine engine. This arrangement requires manual intervention by the combine operator on both sides of the feeder.

Another structure for mounting and connecting a header to a combine harvester is shown in BE 738 854. Herein, the rotating elements of the header are driven by a single shaft that is mounted to the back of the header frame. The inner end of the shaft is splined and has a bushing mounted thereon that can be shifted onto a splined stub shaft on the combine feeder body. The stub shaft is driven by a belt drive on the left hand side of the feeder. The operator shifts the bushing into place for connecting the belt drive to the feeder drive after mounting and securing the header to the front of the feeder. This may be done manually or, alternatively, by using appropriate actuators. As the movable bushing is mounted onto the header, such actuator should be mounted onto the header frame also. Such approach requires a distinct actuator on each corn or grain header.

A device in which manual intervention can be avoided during the coupling and uncoupling of the combine feeder and the combine header would be a significant advancement in the art.

According to one aspect of the invention there is provided an agricultural harvesting machine comprising a drive for a removable header, said drive comprising a gear box having a first and a second jack shaft for driving a first and a second input shaft of said header, respectively,
characterised in that:
said drive further comprises a telescoping jack shaft assembly drivingly connected to said first jack shaft and having an outwardly movable jack shaft for driving said first header input shaft;
said gear box is outwardly movable; and
said drive further comprises an actuator connected to said movable jack shaft and to said gear box for moving said movable jack shaft and said second jack shaft of said gear box in and out of engagement with said input shafts of said header.

According to a further aspect of the invention there is provided a method for remote engagement and disengagement of a drive for a removable header on an agricultural harvesting machine, said method comprising:
a) operating an actuator to initiate coupling or uncoupling between a jack shaft of a gear box and an input shaft of said header,
   characterised in that said method further comprises:
b) operating said actuator to move to initiate coupling or uncoupling between an outwardly movable jack shaft of a telescoping jack shaft assembly and a further input shaft of said header.

The invention permits a combine operator to automatically connect the feeder's PTO shaft to the header's drive shafts without leaving the cab of the combine. This is accomplished by the novel automatic latch device.

The actuator may be a hydraulic actuator assembly with dual hydraulic cylinders. Preferably, the gear box and telescopic jack shaft are arranged to be in alignment with and engageable with couplers from either side of the header, when the header is assembled against the feeder adapter interface. The telescopic jack shaft assembly extends from the gear box at one end to engage header couplers at the other end. The coupling can be spring-loaded to handle any drive misalignment. An electronic processor may control the header drive to fully engage upon the slow rotation of the drive shaft. Such electronic controls act to sequence the events and prevent either premature engagement or premature disengagement of the latching system.

An embodiment of the present invention will now be described in further detail, by way of example only, with reference to the accompanying drawings, in which:
Figure 1 is a side view of the automatic latch device according to the present invention while being mounted atop the feeder/header interface and while having its splined jack shaft disengaged;
Figure 2 is a frontal view of the latch device of Figure 1, showing the actuator pistons moved centrally to telescopically retract or withdraw the splined jack shaft;
Figure 3 is another frontal view of the latch device of Figure 1 showing the actuator pistons fully opened so as to telescopically expand or extend the splined jack shaft;
Figure 4 is an end view of the base of the latch device at a cross-section 4-4 from Figure 2;
Figure 5 shows a schematic top view of the latch device having the header drive shaft couplers engaged;
Figure 6 is a cross-section of a coupler for the present invention where the latch device is disengaged;
Figure 7 is a cross-sectional view of the coupler depicted in Figure 6 but engaged with the latch device;
Figure 8 is a top view of a schematic of the latch device similar to Figure 5 except that the couplers are engaged rather than disengaged; and
Figure 9 is a coupler similar to Figures 6 and 7 except that the latch device is more fully engaged.

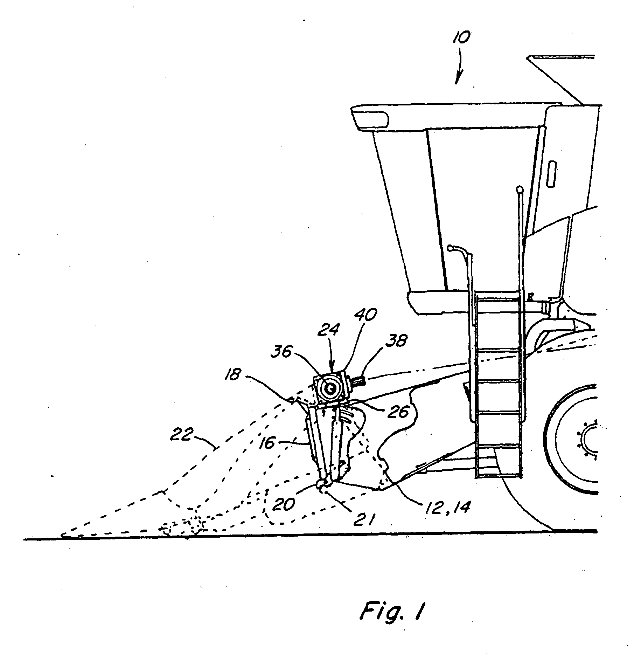

Referring now to Figure 1, gear box 40 of the header/feeder automatic latch device 24 of the present invention is shown mounted on mounting plate 26 which is mounted at the top of the interface between header 22 and feeder housing 14. The gear box 40 has an input drive shaft 38, which an operator driver may drivingly connect to the engine of the combine harvester 10. When connecting the combine feeder 12 to the combine header 22 in the course of the present invention, an operator driver would drive the combine 10 up against header 22 which could be resting on a trailer (not shown), allowing the feeder pickup hook 18 to engage a slot in header 22 and allowing quick-connect latch 20 to connect to quick-connect latch pin 21, which would appear on each side of the feeder 12 (in the case of quick-connect latch 20) and header 22 (in the case of quick-connect pin 21). Thus, the inlet end 16 of feeder 12 can receive crop material from header 22 after gear box 40 is electronically and hydraulically activated.

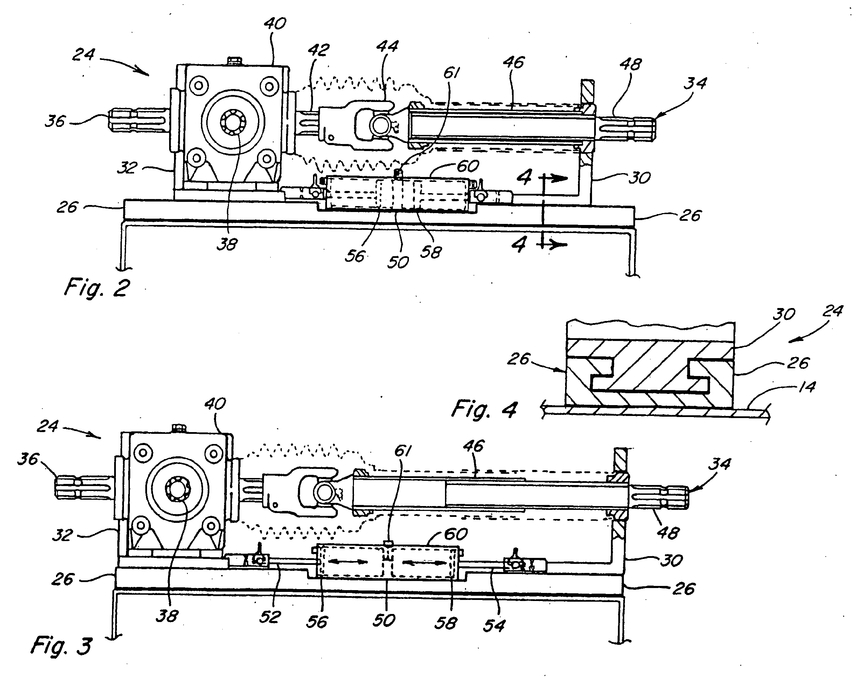

Referring to Figure 2, the latch device 24 is shown in a retracted or withdrawn state prior to activation. Sliding gearbox support 32 and sliding shaft support 30 are adapted to slide laterally along mounting plate 26, but in Figure 2 are resting in a retracted state withdrawn from the lateral ends of plate 26. Hydraulic double acting actuator 50 provides the actuation for extending latch device 24 along plate 26. Telescoping jack shaft assembly 34 extends through sliding shaft support 30 and connects to universal joint 44 which is connected to outward shaft 42 from gearbox 40. The telescoping jack shaft assembly 34 consists of male splined jack shaft 48 and female splined sleeve shaft 46 which receives shaft 48 telescopically. Activation of the automatic latch apparatus of the present invention begins when hydraulic pressure from oil entering at the fluid input 61 begins to drive pistons 56, 58 and rods 52, 54 in opposite directions, allowing supports 32 and 30 to slideably extend in opposite directions and resulting in telescopic shaft assembly 34 beginning to slide outward while at the same time the gearbox 40 slides outward in the opposite direction. A cross-section 4-4 of support 30 and mounting plate 26 shows that the two are slideably assembled and permits the action described above. Also, see Figure 4.

Referring to Figures 3 and 4, the automatic latch device 40 of the present invention is fully extended. You will note that supports 32 and 30 have fully extended to the perimeter of mounting plate 26. Additionally, pistons 56 and 58 which are housed within double action cylinder 60 have fully extended from the force of fluid having entered through fluid input 61.

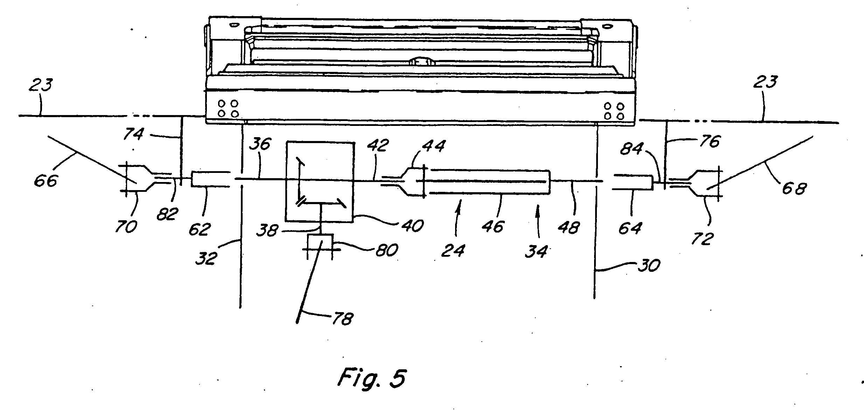

A schematic top view of the autolatch is shown in Figure 5, which furthermore includes the linkages for connecting the drive shafts 66 and 68 of the header interface 23. The linkages include a pair of shafts 82, 84, supported by interface members 74, 76 and a pair of universal joints 70, 72 connecting the shafts 82, 84 to the respective header drive shafts 66, 68. The input drive shaft 38 of the gear box 40 is connected through a further universal joint 80 to a main header drive shaft 78.

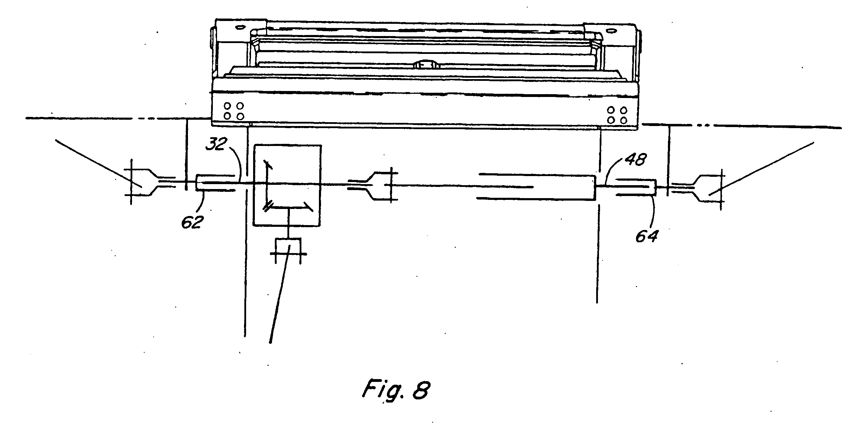

Autolatch device 24 is shown to be contracted and not yet fully extended to latch the header 22 to the feeder 12. You will note that couplers 62 and 64 have not yet been engaged with shafts 36 and 48, respectively. This is in contrast to Figure 8 where the latch device 24 is indeed fully extended, engaged and latched, via gearbox 40, and via telescopic shaft 46 sliding outward enabling shafts 36 and 48 to be engaged into couplers 62 and 64.

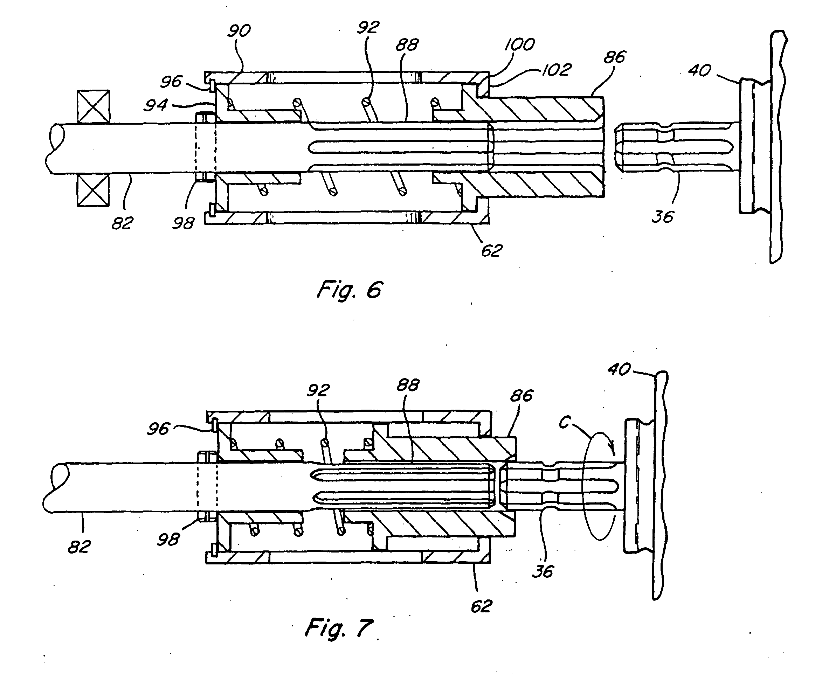

Referring to Figures 1, 6, 7 and 9, the sequence of activating and engaging the auto device 24 into couplers 62 and thus coupling the feeder 12 with the header 22 is shown. Figure 6 illustrates an initial stage where shaft 36 has not yet been activated or extended. Also note that the female splined sleeve 86 is biased flush against inner flange 100 of coupler 62. The position of flange 100 is at the top of shaft 88 over which is fitted over sleeve 86. Furthermore note that spring 92 has not yet been compressed or biased. A sleeve 94 is fixed in retainer housing 90 by a retainer ring 96 to provide a base for the biasing of spring 92 and roll pin 98, ensuring that there is support along drive shaft 82 for retaining the momentum that will be provided upon activation of and engagement with the shaft 36 extending from and attached to gearbox 40.

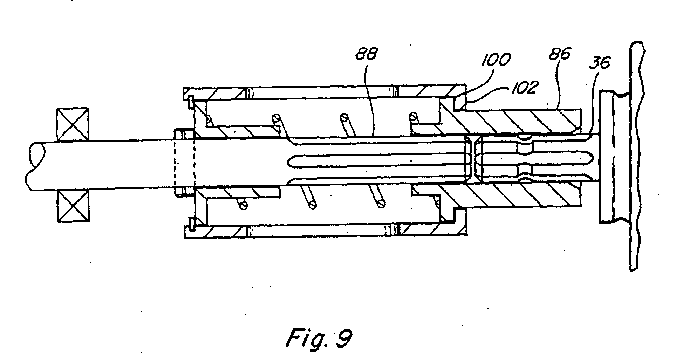

Figure 7 shows the next stage, or beginning activation. Shaft 36 is now extended into the female splined sleeve 46 and the pressure therefrom causes sleeve 86 to move laterally against the bias of spring 92, and along the direction of shaft 88. Also shaft 36 now begins to spin in a circle as designated by arrow C until the splines align themselves. Once the splines are aligned, the latching is complete as shown in Figure 9, where shaft 86 responds to the spring bias and returns flush against flange 100 and outer flange 102, while shaft 36 remains extended into the opening and said shaft 36 almost touches shaft 88.

Although the invention has been described in its preferred form with a certain degree of particularity, it is understood that the structure of the preferred form may be changed in the details of construction, and that the combination and arrangement of parts may be modified without departing from the scope of the invention as defined by the claims. Particularly note that the position of the automatic device along the interface between the combine feeder 12 and the header 22 is illustrated at its preferred top position of the interface, but could be positioned at other places along the interface.

## Claims

1. An agricultural harvesting machine (10) comprising a drive for a removable header (22), said drive comprising a gear box (40) having a first and a second jack shaft (42, 36) for driving a first and a second input shaft (84, 82) of said header, respectively,
**characterised in that**:
said drive further comprises a telescoping jack shaft assembly (34) drivingly connected to said first jack shaft (42) and having an outwardly movable jack shaft (48) for driving said first header input shaft (84);
said gear box (40) is outwardly movable; and
said drive further comprises an actuator (50) connected to said movable jack shaft (48) and to said gear box (40) for moving said movable jack shaft (48) and said second jack shaft (36) of said gear box (40) in and out of engagement with said input shafts (84, 82) of said header.

2. An agricultural harvesting machine according to claim 1, **characterised in that**:
said movable jack shaft (48) is mounted to a shaft support (30);
said gear box (40) is mounted to a gear box support (32);
said shaft support and said gear box support are slidingly mounted to mounting plate (26) affixed to a feeder housing (14) or a header interface (23) of said harvesting machine (10); and
said actuator (50) is connected to said shaft support (30) and to said gear box support (32).

3. An agricultural harvesting machine according to claim 2, **characterised in that** said actuator (50) is received in a channel in said mounting plate (26).

4. An agricultural harvesting machine according to claim 2 or 3, **characterised in that** said shaft support (30) and said gear box support (32) are slidingly mounted to said mounting plate (26) by brackets.

5. An agricultural harvesting machine according to any of the preceding claims, **characterised in that** said telescoping jack shaft assembly (34) comprises a universal joint (44) connecting said assembly to said first jack shaft (42) of said gear box (40).

6. An agricultural harvesting machine according to any of the preceding claims, **characterised in that** said header drive further comprises spring loaded couplers (62, 64) for coupling said movable jack shaft (48) and said second jack shaft (36) of said gear box (40) to said input shafts (84, 82) of said header (22).

7. An agricultural harvesting machine according to claim 6, **characterised in that** said couplers (62, 64) each comprise a sleeve (86) that is resiliently mounted onto one of said header input shafts (84, 82) for slidingly receiving therein said movable jack shaft (48) or said second jack shaft (36).

8. An agricultural harvesting machine according to any of the preceding claims, **characterised in that** said gear box (40) further has an input shaft (38) for rotary driving connection to a main feeder drive shaft (78) of said harvesting machine (10).

9. An agricultural harvesting machine according to any of the preceding claims, **characterised in that** said actuator (50) is a double hydraulic cylinder and rod, master-slave assembly.

10. An agricultural harvesting machine according to any of the preceding claims, **characterised in that** it further comprises an electronic processor for controlling the sequence of engagement and disengagement of said header drive, said processor being operable to slow rotation of said telescoping jack shaft assembly (34) and said second jack shaft (36) of said gear box (40) before the full engagement of said header drive.

11. A method for remote engagement and disengagement of a drive for a removable header (22) on an agricultural harvesting machine (10), said method comprising:
a) operating an actuator (50) to initiate coupling or uncoupling between a jack shaft (36) of a gear box (40) and an input shaft (82) of said header (22);
**characterised in that** said method further comprises:
b) operating said actuator to move to initiate coupling or uncoupling between an outwardly movable jack shaft (48) of a telescoping jack shaft assembly (34) and a further input shaft (84) of said header (22).

12. A method according to claim 11, **characterised in that** it comprises operating said actuator (50) to simultaneously initiate coupling or uncoupling of said gear box jack shaft (36) and of said movable jack shaft (48).

13. A method according to claim 11 or 12, **characterised in that** it comprises:
a) operating said actuator (50) to move said gear box (40) to initiate coupling or uncoupling between said gear box jack shaft (36) and said input shaft (82) of said header (22); and
b) operating said actuator (50) to move said movable jack shaft (48) to initiate coupling or uncoupling between said movable jack shaft (48) and said further input shaft (84) of said header.

14. A method according to any of the preceding claims 11 to 13, **characterised in that** it further comprises:
c) slowing rotation of said gear box jack shaft (36) and said movable jack shaft (48) before the full engagement of said header drive.

## Patentansprüche

1. Landwirtschaftliche Erntemaschine (10) mit einem Antrieb für ein auswechselbares Vorsatzgerät (22), wobei der Antrieb ein Getriebegehäuse (40) umfasst, das eine erste und eine zweite Zwischenwelle (42, 36) zum Antrieb einer ersten beziehungsweise einer zweiten Eingangswelle (84, 82) des Vorsatzgerätes aufweist,
**dadurch gekennzeichnet, dass**:
der Antrieb weiterhin eine Teleskop-Zwischenwellen-Baugruppe (34) umfasst, die antriebsmäßig mit der ersten Zwischenwelle (42) verbunden ist und eine nach außen hin bewegliche Zwischenwelle (48) zum Antrieb der ersten Vorsatzgeräte-Eingangswelle (84) aufweist;
das Getriebegehäuse (40) nach außen hin beweglich ist; und
der Antrieb weiterhin eine Betätigungsvorrichtung (50) umfasst, die mit der beweglichen Zwischenwelle (48) und dem Getriebegehäuse (40) verbunden ist, um die bewegliche Zwischenwelle (48) und die zweite Zwischenwelle (36) des Getriebegehäuses (40) in und außer Eingriff mit den Eingangswellen (84, 82) des Vorsatzgerätes zu bewegen.

2. Landwirtschaftliche Erntemaschine nach Anspruch 1, **dadurch gekennzeichnet, dass**:
die bewegliche Zwischenwelle (48) auf einer Wellen-Halterung (30) befestigt ist;
das Getriebegehäuse (40) auf einer Getriebegehäuse-Halterung (32) befestigt ist;
die Wellen-Halterung und die Getriebegehäuse-Halterung gleitend auf einer Befestigungsplatte (26) befestigt sind, die an einem Zuführungsförderer-Gehäuse (14) oder einer Vorsatzgeräte-Grenzfläche (23) der Erntemaschine (10) befestigt ist; und
die Betätigungsvorrichtung (50) mit der Wellen-Halterung (30) und der Getriebegehäuse-Halterung (32) verbunden ist.

3. Landwirtschaftliche Erntemaschine nach Anspruch 2, **dadurch gekennzeichnet, dass** die Betätigungsvorrichtung (50) in einem Kanal in der Befestigungsplatte (26) aufgenommen ist.

4. Landwirtschaftliche Erntemaschine nach Anspruch 2 oder 3, **dadurch gekennzeichnet, dass** die Wellen-Halterung (30) und die Getriebegehäuse-Halterung (32) gleitend an der Befestigungsplatte (26) über Haltebügel befestigt sind.

5. Landwirtschaftliche Erntemaschine nach einem der vorhergehenden Ansprüche, **dadurch gekennzeichnet, dass** die Teleskop-Zwischenwellen-Baugruppe (34) ein Universalgelenk (44) umfasst, das die Baugruppe mit der ersten Zwischenwelle (42) des Getriebegehäuses (40) verbindet.

6. Landwirtschaftliche Erntemaschine nach einem der vorhergehenden Ansprüche, **dadurch gekennzeichnet, dass** der Vorsatzgeräte-Antrieb weiterhin federvorgespannte Koppler (62, 64) zum Kuppeln der beweglichen Zwischenwelle (48) und der zweiten Zwischenwelle (36) des Getriebegehäuses (40) mit den Eingangswellen (84, 82) des Vorsatzgerätes (22) umfasst.

7. Landwirtschaftliche Erntemaschine nach Anspruch 6, **dadurch gekennzeichnet, dass** die Koppler (62, 64) jeweils eine Hülse (86) umfassen, die elastisch auf einer der Vorsatzgeräte-Eingangswellen (84, 82) befestigt ist, um die bewegliche Zwischenwelle (48) oder die zweite Zwischenwelle (36) darin gleitend aufzunehmen.

8. Landwirtschaftliche Erntemaschine nach einem der vorhergehenden Ansprüche, **dadurch gekennzeichnet, dass** das Getriebegehäuse (40) weiterhin eine Eingangswelle (38) für eine Drehantriebsverbindung mit einer Haupt-Zuführungsförderer-Antriebswelle (78) der Erntemaschine (10) aufweist.

9. Landwirtschaftliche Erntemaschine nach einem der vorhergehenden Ansprüche, **dadurch gekennzeichnet, dass** die Betätigungsvorrichtung (50) eine doppelt-wirkende hydraulische Zylinder- und Kolbenstangen-Master-Slave-Baugruppe ist.

10. Landwirtschaftliche Erntemaschine nach einem der vorhergehenden Ansprüche, **dadurch gekennzeichnet, dass** sie weiterhin einen elektronischen Prozessor zur Steuerung der Folge des Eingriffs oder der Trennung des Vorsatzgeräte-Antriebs umfasst, wobei der Prozessor betreibbar ist, um die Drehung der Teleskop-Zwischenwellen-Baugruppe (34) und der zweiten Zwischenwelle (36) des Getriebegehäuses (40) vor dem vollständigen Eingriff des Vorsatzgeräte-Antriebs zu verlangsamen.

11. Verfahren zur ferngesteuertem Einkupplung und Auskupplung eines Antriebs für ein auswechselbares Vorsatzgerät (22) auf einer landwirtschaftlichen Erntemaschine (10), wobei das Verfahren Folgendes umfasst:
a) Betätigen einer Betätigungsvorrichtung (50) zum Einleiten des Einkuppelns oder Auskuppelns zwischen einer Zwischenwelle (36) eines Getriebegehäuses (40) und einer Eingangswelle (82) des Vorsatzgerätes (22);
**dadurch gekennzeichnet, dass** das Verfahren weiterhin Folgendes umfasst:
b) Betätigen der Betätigungsvorrichtung zum Bewegen zum Einleiten des Einkuppelns oder Auskuppelns zwischen einer sich nach außen bewegbaren Zwischenwelle (48) einer Teleskop-Zwischenwellen-Baugruppe (34) und einer weiteren Eingangswelle (84) des Vorsatzgerätes (22).

12. Verfahren nach Anspruch 11, **dadurch gekennzeichnet, dass** es die Betätigung der Betätigungsvorrichtung (50) zur gleichzeitigen Einleitung des Einkuppelns oder Auskuppelns der Getriebegehäuse-Zwischenwelle (36) und der beweglichen Zwischenwelle (48) umfasst.

13. Verfahren nach Anspruch 11 oder 12, **dadurch gekennzeichnet, dass** es Folgendes umfasst:
a) Betätigen der Betätigungsvorrichtung (50) zum Bewegen des Getriebegehäuses (40) zur Einleitung des Einkuppelns oder Auskuppelns zwischen der Getriebegehäuse-Zwischenwelle (36) und der Eingangswelle (82) des Vorsatzgerätes (22); und
b) Betätigen der Betätigungsvorrichtung (50) zum Bewegen der beweglichen Zwischenwelle (48) zum Einleiten des Einkuppelns oder Auskuppelns zwischen der beweglichen Zwischenwelle (48) und der weiteren Eingangswelle (84) des Vorsatzgerätes.

14. Verfahren nach einem der vorhergehenden Ansprüche 11 bis 13, **dadurch gekennzeichnet, dass** es weiterhin Folgendes umfasst:
c) Verlangsamen der Drehung der Getriebegehäuse-Zwischenwelle (36) und der beweglichen Zwischenwelle (48) vor dem vollständigen Einkuppeln des Vorsatzgeräte-Antriebs.

## Revendications

1. Machine de récolte agricole (10) comprenant un mécanisme d'entraînement pour une tête de coupe (22) amovible, ledit mécanisme d'entraînement comprenant un boîtier d'engrenage (40) comportant un premier et un second arbres intermédiaires (42, 36) destinés à entraîner respectivement un premier et un second arbres d'attaque (84, 82) de ladite tête de coupe,
**caractérisée en ce que** :
ledit mécanisme d'entraînement comprend en plus un ensemble d'arbre intermédiaire télescopique (34) relié en entraînement au dit premier arbre intermédiaire (42) et comportant un arbre intermédiaire mobile vers l'extérieur (48) pour entraîner ledit premier arbre d'attaque (84) de tête de coupe,
ledit boîtier d'engrenage (40) est mobile vers l'extérieur, et
ledit mécanisme d'entraînement comprend en plus un actionneur (50) relié au dit arbre intermédiaire mobile (48) et au dit boîtier d'engrenage (40) pour faire mouvoir ledit arbre intermédiaire mobile (48) et ledit second arbre intermédiaire (36) du boîtier d'engrenage (40) dans et à l'extérieur de l'engrènement avec les dits arbres d'attaque (84, 82) de ladite tête de coupe.

2. Machine de récolte agricole selon la revendication 1, **caractérisée en ce que**:
ledit arbre intermédiaire mobile (48) est monté sur un support d'arbre (30),
ledit boîtier d'engrenage (40) est monté sur un support de boîtier d'engrenage (32),
ledit support d'arbre et ledit support de boîtier d'engrenage sont montés de manière coulissante sur le flasque de montage (26) apposé à un caisson de dispositif d'alimentation (14) ou une jonction de dispositif d'alimentation (23) de ladite machine de récolte (10), et
ledit actionneur (50) est relié audit support d'arbre (30) et audit support de boîtier d'engrenage (32).

3. Machine de récolte agricole selon la revendication 2, **caractérisée en ce que** ledit actionneur (50) est reçu dans une rainure dans ledit flasque de montage (26).

4. Machine de récolte agricole selon la revendication 2 ou 3, **caractérisée en ce que** ledit support d'arbre (30) et ledit support de boîtier d'engrenage (32) sont montés de manière coulissante sur ledit flasque de montage (26) par des étriers.

5. Machine de récolte selon l'une quelconque des revendications précédentes, **caractérisée en ce que** ledit ensemble d'arbre intermédiaire télescopique (34) comprend un joint universel (44) reliant ledit ensemble au dit premier arbre intermédiaire (42) du dit boîtier d'engrenage (40).

6. Machine de récolte selon l'une quelconque des revendications précédentes, **caractérisée en ce que** ledit mécanisme d'entraînement de tête de coupe comprend en plus des manchons d'accouplement à ressort (62, 64) destinés à accoupler ledit arbre intermédiaire mobile (48) et ledit second arbre intermédiaire (36) du dit boîtier d'engrenage (40) aux dits arbres d'attaque (84, 82) de ladite tête de coupe (22).

7. Machine de récolte agricole selon la revendication 6, **caractérisée en ce que** les dits manchons d'accouplement (62, 64) comprennent chacun un palier (86) qui est monté de façon élastique sur l'un des dits arbres d'attaque de tête de coupe (84, 82) pour recevoir de façon coulissante à l'intérieur ledit arbre intermédiaire mobile (48) ou ledit second arbre intermédiaire (36).

8. Machine de récolte selon l'une quelconque des revendications précédentes, **caractérisée en ce que** ledit boîtier d'engrenage (40) comporte en plus un arbre d'attaque (38) destiné à être couplé à entraînement en rotation à un arbre d'entraînement principal (78) du dispositif d'alimentation de ladite machine de récolte (10).

9. Machine de récolte selon l'une quelconque des revendications précédentes, **caractérisée en ce que** ledit actionneur (50) est un dispositif à double vérin hydraulique et à tige, de type maître-esclave.

10. Machine de récolte selon l'une quelconque des revendications précédentes, **caractérisée en ce que** elle comprend en plus un processeur électronique destiné à commander la séquence d'enclenchement et de désengagement du dit mécanisme d'entraînement de tête de coupe, ledit processeur étant opérationnel pour ralentir la rotation du dit ensemble d'arbre intermédiaire télescopique (34) et du dit second arbre intermédiaire (36) du dit boîtier d'engrenage (40) avant l'enclenchement complet du dit mécanisme d'entraînement de tête de coupe.

11. Procédé d'enclenchement et de désengagement à distance d'un mécanisme d'entraînement d'une tête de coupe amovible (22) sur une machine de récolte agricole (10), ledit procédé comprenant l'opération consistant à :
a) solliciter un actionneur (50) pour amorcer l'accouplement ou le désaccouplement entre un arbre intermédiaire (36) d'un boîtier d'engrenage (40) et un arbre d'attaque (82) de ladite tête de coupe (22),
**caractérisé en ce que** le procédé comprend en plus l'opération consistant à:
b) solliciter l'actionneur pour le faire mouvoir afin de déclencher l'accouplement ou le désaccouplement entre un arbre intermédiaire mobile vers l'extérieur (48) d'un ensemble télescopique d'arbre intermédiaire (34) et un arbre d'attaque complémentaire (84) de ladite tête de coupe (22).

12. Procédé selon la revendication 11, **caractérisé en ce qu'**il comprend une sollicitation du dit actionneur (50) pour déclencher simultanément l'accouplement ou le désaccouplement du dit arbre intermédiaire (36) du boîtier d'engrenage et du dit arbre intermédiaire mobile (48).

13. Procédé selon la revendication 11 ou 12, **caractérisé en ce qu'**il comprend :
a) une sollicitation du dit actionneur (50) pour mettre en mouvement ledit boîtier d'engrenage (40) afin de déclencher l'accouplement ou le désaccouplement entre ledit arbre intermédiaire (36) du boîtier d'engrenage et ledit arbre d'attaque (82) de ladite tête de coupe (22), et
b) une sollicitation du dit actionneur (50) pour mettre en mouvement ledit arbre intermédiaire mobile (48) pour déclencher l'accouplement ou le désaccouplement entre ledit arbre intermédiaire mobile (48) et ledit arbre d'attaque complémentaire (84) de ladite tête de coupe.

14. Procédé selon l'une quelconque des revendications précédentes 11 à 13, **caractérisé en ce qu'**il comprend en outre:
c) un ralentissement de la rotation du dit arbre intermédiaire (36) du boîtier d'engrenage et du dit arbre intermédiaire mobile (48) avant l'enclenchement complet du dit mécanisme d'entraînement de la tête de coupe.
